# EUROPÄISCHE PATENTSCHRIFT

(11) **EP 3 637 597 B1**
(45) Veröffentlichungstag und Bekanntmachung des Hinweises auf die Patenterteilung: **11.05.2022**
(21) Anmeldenummer: 18465592.6
(22) Anmeldetag: 08.10.2018
(51) Int. Cl.: H02K 5/26

(54) **VERFAHREN ZUM FIXIEREN EINER ERSTEN KOMPONENTE IN EINER ZWEITEN KOMPONENTE UND HIERMIT HERGESTELLTE EINHEIT, INSBESONDERE AKTUATOR**
METHOD FOR FIXING A FIRST COMPONENT IN A SECOND COMPONENT AND UNIT MADE BY USING THE SAME, IN PARTICULAR ACTUATOR
PROCÉDÉ DE FIXATION D'UN PREMIER COMPOSANT DANS UN SECOND COMPOSANT ET UNITÉ AINSI FABRIQUÉE, EN PARTICULIER UN ACTIONNEUR

(43) Veröffentlichungstag der Anmeldung: 15.04.2020
(73) Patentinhaber: Vitesco Technologies GmbH, 93055 Regensburg (DE)
(72) Erfinder: Albert, Eusebio-Marius, 300737 Timisoara (RO); Drienovsky, Mihai, 300686 Timisoara (RO)
(74) Vertreter: Vitesco Technologies

(56) Entgegenhaltungen:
- DE-A1-102013 101 938
- FR-A1- 3 059 060

## Beschreibung

Die vorliegende Erfindung betrifft ein Verfahren zum Fixieren einer ersten Komponente in einer zweiten Komponente, bei dem die erste Komponente durch Presspassung in der zweiten Komponente zentriert und fixiert wird.

Ein derartiges Verfahren ist bekannt und findet beispielsweise zum Fixieren eines Elektromotors, insbesondere Gleichstrommotors, im Gehäuse eines Aktuators Verwendung. Ein solcher Aktuator kann beispielsweise zum Steuern bestimmter Komponenten dienen, wobei der Elektromotor mit einem Getriebe in Verbindung steht, das eine entsprechende Bewegungsgröße bereitstellt.

Die Fixierung der ersten Komponente, beispielsweise des Gleichstrommotors, in der zweiten Komponente, beispielsweise des Aktuatorgehäuses, erfolgt dabei durch eine Presspassung, und diese Presspassung muss für zwei beliebige Komponenten geeignet sein, da der Toleranzbereich bei entsprechenden Komponenten berücksichtigt werden muss. Ferner besteht das Problem, dass die Presspassung für alle Temperaturen eines entsprechenden Betriebstemperaturbereiches, beispielsweise zwischen -40°C und +200°C, geeignet sein muss. Da jedoch die erste Komponente und die zweite Komponente üblicherweise aus unterschiedlichen Materialien bestehen, die unterschiedliche Wärmeausdehnungskoeffizienten besitzen, und da beide Materialien einen bestimmten Dimensionstoleranzbereich bei unterschiedlichen Temperaturen aufweisen sowie einige Dimensionsunterschiede vorhanden sind, kann es hierbei passieren, dass die Presspassungskraft zwischen der ersten Komponente und der zweiten Komponente zu groß wird und auf diese Weise entsprechende Spannungen in den Komponenten erzeugt werden oder zu klein wird, so dass kein Kontakt mehr zwischen den Komponenten besteht und sich zwischen diesen ein Spalt bildet.

Aus der DE 10 2013 101 938 A1 ist eine Antriebsanordnung für Aggregate eines Verbrennungsmotors bekannt, bei der ein Elektromotor in einen Deckel geschoben wird, wobei ein elastisches Zwischenelement zwischen Deckel und Elektromotor angeordnet und mit dem Einschieben des Elektromotors verspannt wird.

Die FR 3 059 060 A1 offenbart eine Kunststoffbuchse zur Fixierung eines Elektromotors in einem Aktuatorgehäuse. Die Kunststoffbuchse kann am Aktuatorgehäuse angegossen sein.

Der vorliegenden Erfindung liegt die Aufgabe zugrunde, ein Verfahren der eingangs beschriebenen Art zur Verfügung zu stellen, mit dem eine besonders sichere Fixierung der Komponenten aneinander erreichbar ist.

Diese Aufgabe wird erfindungsgemäß bei einem Verfahren der angegebenen Art durch die kennzeichnenden Merkmale von Patentanspruch 1 gelöst. Die Erfindung ist definiert durch die unabhängigen Ansprüche 1 und 6.

Ohne Beeinflussung der entsprechenden Toleranzbereiche der Komponenten schlägt die vorliegende Erfindung die Anordnung eines zusätzlichen Teiles im System vor, das durch Überformen der Innenseite der zweiten Komponente generiert wird. In dieser an der zweiten Komponente übergeformten Kunststoffbuchse wird dann die erste Komponente zentriert und fixiert.

Durch die Anordnung eines Zwischenteiles zwischen beiden Komponenten wird der Übergang zwischen der ersten Komponente und der zweiten Komponente ausgeglichen bzw. angeglichen, so dass die entsprechenden Unterschiede in den Presspassungskräften weitgehend reduziert bzw. normalisiert werden können. Das Auftreten von einerseits zu hohen Presspassungskräften und andererseits zu niedrigen Presspassungskräften, die zu den vorstehend angedeuteten Nachteilen führen, wird daher trotz unterschiedlicher Materialien, unterschiedlicher Wärmeausdehnungskoeffizienten, unterschiedlicher Temperaturen etc. vermieden.

Es wird eine erste Komponente verwendet, die einen mittigen Ansatz an der Unterseite aufweist, der in eine Ausnehmung der zweiten Komponente eingreift, und wird die Innenseite der Ausnehmung überformt, um dort die Kunststoffbuchse bzw. einen Teil hiervon auszubilden. Dabei kann beispielsweise in dem erwähnten Ansatz eine Lagerbuchse für einen Rotor (Bronzebuchse) des Gleichstrommotors angeordnet sein. Der Ansatz der ersten Komponente wird dann mittels Presspassung in der mit der Kunststoffbuchse überformten Ausnehmung der zweiten Komponente angeordnet.

Speziell wird bei dem erfindungsgemäßen Verfahren eine im Schnitt H-förmige Kunststoffbuchse im Bodenbereich der zweiten Komponente überformt, in die der Ansatz der ersten Komponente eingreift. Dabei findet die Zentrierung der ersten Komponente immer in einer von zwei Funktionsstufen statt, nämlich einer inneren Presspassung zwischen erster Komponente und überformter Kunststoffbuchse und einer äußeren Presspassung zwischen erster Komponente und überformter Kunststoffbuchse, da die überformte Kunststoffbuchse hierbei die zweite Komponente von innen und außen kontaktiert.

Bei dem erfindungsgemäßen Verfahren wird vorzugsweise mit einer Kunststoffbuchse so überformt, dass deren Wärmeausdehnungskoeffizient derart auf den Wärmeausdehnungskoeffizient der ersten Komponente und/oder zweiten Komponente abgestimmt ist, dass in einem Betriebstemperaturbereich bei/nach dem Presspassen keine Grenzspannungen in den Komponenten überschritten werden und kein Kontaktverlust zwischen den Komponenten auftritt. Dabei wird insbesondere eine Kunststoffbuchse mit einem Wärmeausdehnungskoeffizienten überformt, der die obigen Bedingungen in einem Betriebstemperaturbereich von -40°C bis 200°C erfüllt.

Das Material für die überformte Kunststoffbuchse wird daher so ausgewählt, dass sein Wärmeausdehnungskoeffizient in Kombination mit demjenigen der ersten Komponente und der zweiten Komponente in dem genannten Temperaturbereich keine Beschädigung des Systems hervorruft und darüber hinaus auch keinen Spalt zwischen den Komponenten verursacht, der aus einem Lösen der Presspassung resultiert.

Das erfindungsgemäße Verfahren findet vorzugsweise in einem Anwendungsfall Verwendung, bei dem als erste Komponente ein Gleichstrommotor und als zweite Komponente ein Aktuatorgehäuse verwendet wird. Das Aktuatorgehäuse ist dabei im Wesentlichen zylindrisch ausgebildet. Wie erwähnt, findet auf dessen Innenseite zumindest zum Teil eine Überformung mit der Kunststoffbuchse statt. Hierbei kann sowohl der Boden als auch die zylindrische Innenwand des Aktuatorgehäuses mit der Kunststoffbuchse überformt werden. Es kann auch nur ein Teil der zylindrischen Innenwand überformt werden, der für die Presspassung vorgesehen ist.

Jedenfalls wird bei dem erfindungsgemäßen Verfahren die Axialkraft der Presspassung auch so dimensioniert, dass während der Montage die entsprechenden Komponenten, beispielsweise der Gleichstrommotor und das Aktuatorgehäuse, nicht beschädigt werden.

Durch die erfindungsgemäß abgestimmten unterschiedlichen Wärmeausdehnungskoeffizienten der für das Motorgehäuse, die überformte Kunststoffbuchse und das Aktuatorgehäuse verwendeten Materialien werden die durch die Presspassung im System erzeugten Spannungen unter eine kritische Grenze abgesenkt. Insbesondere geht der Kontakt zwischen den Komponenten für eine beliebige Temperatur im entsprechenden Temperaturbereich, der für die Funktionsweise des Systems erforderlich ist (beispielsweise -40°C bis 200°C), nicht verloren, da sich der Zentriervorgang immer in zwei Stadien befindet:
Stadium 1: Innere Presspassung zwischen zweiter Komponente (Aktuatorgehäuse) und übergeformter Kunststoffbuchse
Stadium 2: Äußere Presspassung zwischen zweiter Komponente (Aktuatorgehäuse)und übergeformter Kunststoffbuchse.

In Abhängigkeit von den realen Dimensionswerten und der Temperatur wechselt die Zentrierung zwischen Stadium 1 und Stadium 2 und umgekehrt, so dass während dieses Übergangs immer eine Presspassungskraft vorhanden ist.

Die Erfindung betrifft ferner eine durch ein Verfahren der vorstehend beschriebenen Art gebildete Einheit. Bei dieser Einheit handelt es sich vorzugsweise um einen Aktuator, in dessen Gehäuse ein Elektromotor, insbesondere Gleichstrommotor, durch Presspassung fixiert ist.

Die Erfindung wird nachfolgend anhand eines Ausführungsbeispieles in Verbindung mit der Zeichnung im Einzelnen erläutert.

Die einzige Figur zeigt die Fixierung einer ersten Komponente in einer zweiten Komponente bei der vorliegenden Erfindung.

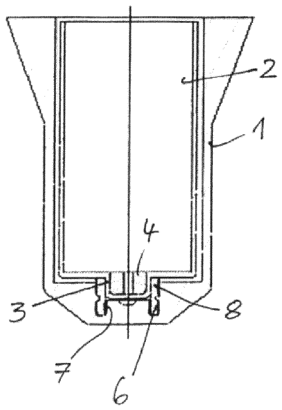

Bei dem erfindungsgemäßen Verfahren wird als erstes zumindest ein Teil der Innenseite der zweiten Komponente 1 zur Ausbildung einer Kunststoffbuchse 8 überformt. Eine derartige Kunststoffbuchse mit H-Form im Schnitt ist bei 8 dargestellt. Bei dieser Ausführungsform wird daher der Boden des Innenraumes der zweiten Komponente 1, der eine zentrische Vertiefung zur Aufnahme des Lageransatzes 3 des Motorgehäuses aufweist, im Bereich dieser Vertiefung so überformt, dass sich die in Figur 3 dargestellte im Schnitt H-förmige Kunststoffbuchse 8 ergibt. Die erwähnte Überformung sollte vorzugsweise mit einem Kunststoffmaterial durchgeführt werden, dessen Wärmeausdehnungskoeffizient zwischen denen der ersten und zweiten Komponente liegt.

Der Lageransatz 3 der ersten Komponente 2 wird dann mittels Presspassung innerhalb der gebildeten Kunststoffbuchse 8 zentriert und fixiert. Dabei ergibt sich eine innere Presspassung zwischen Kunststoffbuchse 8 und zweiter Komponente 1, wie bei 7 gezeigt, und eine äußere Presspassung zwischen Kunststoffbuchse 8 und zweiter Komponente 1, wie bei 6 gezeigt, da die ausgebildete überformte Kunststoffbuchse 8 sowohl mit ihrer radialen Außenseite als auch mit ihrer radialen Innenseite aufgrund ihrer H-Form die zweite Komponente 1 kontaktiert. In Abhängigkeit von den realen Dimensionswerten und der Temperatur wird bei der Zentrierung von Stadium 1 (innere Presspassung 7 zwischen zweiter Komponente 1 und überformter Kunststoffbuchse 8) auf Stadium 2 (äußere Presspassung 6 zwischen zweiter Komponente 1 und überformter Kunststoffbuchse 8) und umgekehrt übergegangen, so dass immer eine Presspassungskraft während dieses Überganges vorhanden ist.

Die überformte Kunststoffbuchse 8 sorgt somit selbst bei hohen Temperaturunterschieden und unterschiedlichen Materialien der ersten Komponente und der zweiten Komponente für eine sichere Fixierung.

## Patentansprüche

1. Verfahren zum Fixieren einer ersten Komponente (2) in einer zweiten Komponente (1), bei dem die erste Komponente (2) durch Presspassung in der zweiten Komponente (1) zentriert und fixiert wird, mit den folgenden Schritten:
Überformen zumindest eines Teiles der Innenseite der zweiten Komponente (1) zur Ausbildung einer Kunststoffbuchse (8); und
Zentrieren und Fixieren der ersten Komponente (2) innerhalb der Kunststoffbuchse (8) der zweiten Komponente (1) mittels Presspassung,
wobei der Boden des Innenraumes der zweiten Komponente (1) eine zentrische Vertiefung zur Aufnahme eines Lageransatzes (3) der ersten Komponente (2) aufweist,
**dadurch gekennzeichnet, dass**
der Boden des Innenraumes der zweiten Komponente (1) im Bereich dieser Vertiefung so überformt wird, dass sich eine im Schnitt H-förmige Kunststoffbuchse (8) ergibt, in der der Lageransatz (3) mittels Presspassung zentriert und fixiert wird.

2. Verfahren nach Anspruch 1, **dadurch gekennzeichnet, dass** mit einer Kunststoffbuchse 8 überformt wird, deren Wärmeausdehnungskoeffizient derart auf den Wärmeausdehnungskoeffizienten der ersten Komponente (2) und/oder zweiten Komponente (1) abgestimmt ist, dass in einem Betriebstemperaturbereich beim/nach dem Presspassen keine Grenzspannungen in den Komponenten (1, 2) überschritten werden und kein Kontaktverlust zwischen den Komponenten (1, 2) auftritt.

3. Verfahren nach Anspruch 2, **dadurch gekennzeichnet, dass** eine Kunststoffbuchse (8) mit einem Wärmeausdehnungskoeffizienten überformt wird, die in einem Betriebstemperaturbereich von -40°C bis 200°C beim/nach dem Presspassen ein Überschreiten von Grenzspannungen in den Komponenten (1, 2) und einen Kontaktverlust zwischen den Komponenten (1, 2) vehindert.

4. Verfahren nach einem der vorangehenden Ansprüche, **dadurch gekennzeichnet, dass** als erste Komponente (2) ein Gleichstrommotor und als zweite Komponente (1) ein Aktuatorgehäuse verwendet wird.

5. Verfahren nach einem der vorangehenden Ansprüche, **dadurch gekennzeichnet, dass** die Zentrierung der ersten Komponente (2) immer in einer von zwei Funktionsstufen stattfindet, nämlich einer inneren Presspassung (7) an der Innenseite der Buchse (8) zwischen zweiter Komponente (1) und überformter Kunststoffbuchse (8) und einer äußeren Presspassung (6) an der Außenseite der Buchse zwischen zweiter Komponente (1) und überformter Kunststoffbuchse (8).

6. Durch ein Verfahren nach einem der Ansprüche 1 bis 5 gebildete Einheit mit einer ersten Komponente (2), die einen mittigen Lageransatz (3) an der Unterseite aufweist, der in eine zentrische Vertiefung einer zweiten Komponente (1) eingreift, **gekennzeichnet dadurch, dass** eine im Schnitt H-förmige Kunststoffbuchse (8) im Bodenbereich der zweiten Komponente (1) überformt ist, in die der Ansatz (3) der ersten Komponente (2) eingreift.

7. Einheit nach Anspruch 6, **dadurch gekennzeichnet, dass** sie ein Aktuator ist, in dessen Gehäuse ein Elektromotor, insbesondere Gleichstrommotor, durch Presspassung fixiert ist.

## Claims

1. Method for fixing a first component (2) in a second component (1), in which the first component (2) is centred and fixed in the second component (1) by a press fit, comprising the following steps:
overmoulding at least a part of the inner side of the second component (1) in order to form a plastics sleeve (8); and
centring and fixing the first component (2) within the plastics sleeve (8) of the second component (1) by means of a press fit,
wherein the base of the interior space of the second component (1) has a centric depression for receiving a bearing projection (3) of the first component (2),
**characterized in that**
the base of the interior space of the second component (1) is overmoulded in the region of this depression such that a plastics sleeve (8) of H-shaped form in section is produced, the bearing projection (3) being centred and fixed in said plastics sleeve by means of a press fit.

2. Method according to Claim 1, **characterized in that** overmoulding is carried out by way of a plastics sleeve (8) whose coefficient of thermal expansion is adapted to the coefficient of thermal expansion of the first component (2) and/or second component (1) in such a way that no boundary stresses in the components (1, 2) are exceeded and no loss of contact between the components (1, 2) occurs in an operating temperature range during/after the press fitting.

3. Method according to Claim 2, **characterized in that** a plastics sleeve (8) with a coefficient of thermal expansion is overmoulded, said plastics sleeve preventing the exceedance of boundary stresses in the components (1, 2) and a loss of contact between the components (1, 2) in an operating temperature range of -40°C to 200°C during/after the press fitting.

4. Method according to one of the preceding claims, **characterized in that** a DC motor is used as the first component (2), and an actuator housing is used as the second component (1).

5. Method according to one of the preceding claims, **characterized in that** the centring of the first component (2) always takes place in one of two functional stages, specifically an inner press fit (7) on the inner side of the sleeve (8) between the second component (1) and the overmoulded plastics sleeve (8), and an outer press fit (6) on the outer side of the sleeve between the second component (1) and the overmoulded plastics sleeve (8).

6. Unit formed by a method according to one of Claims 1 to 5, having a first component (2) which has, on the lower side, a central bearing projection (3) which engages into a centric depression of a second component (1), **characterized in that** a plastics sleeve (8) of H-shaped form in section is overmoulded in the base region of the second component (1), the projection (3) of the first component (2) engaging into said sleeve.

7. Unit according to Claim 6, **characterized in that** it is an actuator, an electric motor, in particular a DC motor, being fixed in the housing of said actuator by way of a press fit.

## Revendications

1. Procédé de fixation d'un premier composant (2) dans un deuxième composant (1), procédé dans lequel le premier composant (2) est centré et fixé dans le deuxième composant (1) par ajustement serré, le procédé comprenant les étapes suivantes :
surmouler au moins une partie du côté intérieur du deuxième composant (1) pour former une douille (8) en matière synthétique ; et
centrer et fixer le premier composant (2) à l'intérieur de la douille (8) en matière synthétique du deuxième composant (1) par ajustement serré,
le fond de l'espace intérieur du deuxième composant (1) comportant un évidement central destiné à recevoir un téton de palier (3) du premier composant (2),
**caractérisé en ce que**
le fond de l'espace intérieur du deuxième composant (1) est surmoulé au niveau de cet évidement de manière à obtenir une douille (8) en matière synthétique, en forme de H en coupe, dans laquelle le téton de palier (3) est centré et fixé par ajustement serré.

2. Procédé selon la revendication 1, **caractérisé en ce qu'**un surmoulage est effectué avec une douille 8 en matière synthétique dont le coefficient de dilatation thermique est adapté au coefficient de dilatation thermique du premier composant (2) et/ou à celui du deuxième composant (1) de manière qu'aucune tension limite dans les composants (1, 2) ne soit dépassée ni qu'aucune perte de contact entre les composants (1, 2) ne se produise pendant/après l'ajustement serré dans une plage de températures de fonctionnement.

3. Procédé selon la revendication 2, **caractérisé en ce qu'**une douille (8) en matière synthétique est surmoulée avec un coefficient de dilatation thermique qui empêche un dépassement des tensions limites dans les composants (1, 2) et la perte du contact entre les composants (1, 2) pendant/après l'ajustement serré dans une plage de températures de fonctionnement allant de - 40 °C à 200 °C.

4. Procédé selon l'une des revendications précédentes, **caractérisé en ce qu'**un moteur à courant continu est utilisé comme premier composant (2) et un boîtier d'actionneur est utilisé comme deuxième composant (1).

5. Procédé selon l'une des revendications précédentes, **caractérisé en ce que** le centrage du premier composant (2) est toujours effectué dans l'une des deux étapes fonctionnelles, à savoir un ajustement serré intérieur (7) au côté intérieur de la douille (8) entre le deuxième composant (1) et la douille (8) en matière synthétique surmoulée et un ajustement serré extérieur (6) du côté extérieur de la douille entre le deuxième composant (1) et la douille (8) en matière synthétique surmoulée.

6. Unité formée par un procédé selon l'une des revendications 1 à 5 et comprenant un premier composant (2) qui comporte du côté inférieur un téton de palier central (3) qui s'engage dans un évidement central d'un deuxième composant (1), **caractérisée en ce qu'**une douille (8) en matière synthétique, en forme de H en coupe, est surmoulée dans la zone de fond du deuxième composant (1) dans lequel s'engage le téton (3) du premier composant (2).

7. Ensemble selon la revendication 6, **caractérisé en ce que** ledit ensemble est un actionneur dans le boîtier duquel un moteur électrique, notamment un moteur à courant continu, est fixé par ajustement serré.
